# FASCICULE DE BREVET EUROPEEN

(11) **EP 1 480 529 B1**
(45) Date de publication et mention de la délivrance du brevet: **14.11.2007**
(21) Numéro de dépôt: 03715070.3
(22) Date de dépôt: 05.02.2003
(51) Int. Cl.: A23L 1/275, A23P 1/08, A23G 4/06, A23G 3/26, A23G 3/00

(54) **PROCEDE DE COLORATION DE DRAGEES**
VERFAHREN ZUM FÄRBEN VON KONFEKTEN
METHOD OF COLOURING DRAGEES

(30) Priorité: 25.02.2002 FR 0202342
(43) Date de publication de la demande: 01.12.2004
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: MALANDAIN, Michel, F-78112 Fourqueux (FR); MOUTIER, Etienne, 14570 CLECY (FR)
(74) Mandataire: Conan, Philippe Claude
(86) Numéro de dépôt international: PCT/FR2003/000349
(87) Numéro de publication internationale: WO 2003/071882

(56) Documents cités:
- EP-A- 0 273 000
- WO-A-99/24020
- BE-A- 662 884
- FR-A- 2 470 598
- FR-A- 2 660 317
- US-A- 5 716 652

## Description

La présente invention a essentiellement pour objet un procédé d'enrobage et de coloration de dragées. Elle trouve notamment application dans le domaine pharmaceutique ou dans l'industrie alimentaire.

Le pelliculage de comprimés par des films de polymères colorés est couramment utilisé dans l'industrie pharmaceutique. Ce procédé comprend la préparation d'une dispersion, de préférence aqueuse, contenant un polymère filmogène, un système colorant, de préférence des pigments ou des laques, et éventuellement un plastifiant, des charges et / ou des additifs technologiques, puis sa pulvérisation sur les comprimés en mouvement dans une turbine rotative perforée ou dans un lit fluidisé. Un courant d'air chaud, entrant à une température supérieure ou égale à 40°C, assurent le séchage de la dispersion pulvérisée et provoquent la coalescence du film autour des comprimés. La couche déposée a une épaisseur de quelques dizaines de microns ; elle est opaque et colorée de manière homogène.

Pour rester à un niveau de viscosité acceptable, généralement inférieure à 1000 mPas, compatible avec un passage à travers des buses de pulvérisation, la dispersion utilisée est peu concentrée ; elle contient environ de 7 % à 20 % de matière sèche.

Les composants utilisés pour réaliser ces films doivent être conformes aux législations en vigueur dans les domaines pharmaceutiques, diététiques ou alimentaires. C'est pourquoi, les polymères sont en général choisis parmi les dérivés de cellulose comme les hydroxypropyméthyl celluloses (HPMC), les méthyl celluloses (MC), les dextrines ou maltodextrines filmogènes, les alcools polyvinyliques ou encore les polymères acryliques. Les plastifiants les plus utilisés dans le domaine pharmaceutique sont les polyéthylènes glycols (PEG) de poids moléculaires compris entre environ 300 et environ 8000. Ils ne sont pas autorisés pour des applications alimentaires dans lesquelles on préfère la glycérine par exemple. Comme charge, il y a la cellulose, le lactose ou le talc. Parmi les additifs technologiques, il y a par exemple les tensioactifs tels que les polysorbates qui jouent le rôle de mouillants et de dispersants. On peut avantageusement aussi utiliser des compositions prêtes à l'emploi contenant les mélanges de ces différents constituants sous forme de poudres, de granulés ou d'extrudâts. De telles compositions sont décrites par exemple, dans les brevets publiés sous les numéros FR 2 470 598, FR 2 548675 et FR 2 660 317 ou dans la demande internationale de brevet publiée sous les numéros WO 99/24020. Les procédés de pelliculage sont plus rapides que les procédés de dragéification, car les quantités de film déposées sont faibles ; elles ne représentent que 3 % à 5 % de la masse du substrat enrobé. Ils imposent par contre, la mise en oeuvre d'un équipement particulier consistant en un dispositif de pulvérisation associé à un système de séchage performant, car les quantités d'eau à évaporer sont importantes. La demande de brevet européen publiée sous le numéro EP 0 273 000 divulgue un procédé d'enrobage de chewing-gum avec une solution filmogène contenant en autres composants, des sucres comme le xylitol et éventuellement des colorants.

Les dragées sont des formes galéniques constituées d'un noyau central entouré d'une couche protectrice épaisse à base de sucre. Le noyau peut être une amande, un fruit sec, une pépite chocolatée pour les dragées utilisées en confiserie, ou bien un mini-comprimé contenant un ou des principes actifs médicamenteux pour les dragées utilisées en pharmacie. La couche protectrice est généralement constituée de sucre (saccharose) et d'une charge telle que le talc. Elle est formée par applications successives de sirop de sucre clair et de charges dans des turbines rotatives, chaque application de sirop et de charges étant suivie d'une étape de séchage. Les sirops de sucre sont obtenus par dissolution de saccharose dans l'eau à chaud sous agitation ; ils contiennent une concentration élevée en sucre, jusqu'environ 70 % à 80 % en poids, afin de minimiser les quantités d'eau à évaporer. La coloration des dragées s'effectue au moyen d'un sirop de sucre coloré avec des pigments, des laques ou des colorants autorisés dans le domaine d'application visé. Ce sirop coloré est appliqué en fin de montage de la dragée, ce qui évite une coloration dans la masse onéreuse. Enfin, il est parfois procédé à une étape de lustrage ou brillantage au moyen d'une dispersion de cire telle que la cire de carnuba ou la cire d'abeille. Ces procédés de montage et de coloration de dragées sont connus depuis longtemps et sont décrits par exemple dans l'encyclopédie Kirk Othmer (3ème édition volume 17, page 281).

Les dragées traditionnelles au sucre ont l'inconvénient de favoriser les caries dentaires. Récemment, des dragées à base de sucres non cariogènes, comme le maltitol, le xylitol ou le sorbitol ont été développées en confiserie et en diététique, sous forme de gommes à mâcher, de pastilles comprimées ou de caramels. Ces sucres non cariogènes ont des solubilités dans l'eau voisines de celle du saccharose à 20°C, mais sont beaucoup plus solubles à chaud :

**Tableau 1**

| | Hydrosolubilité des sucres (en g / 100 ml) | | |
|---|---|---|---|
| Sucre | à 20°C | à 37°C | à 60°C |
| Saccharose | 200 | 229 | 280 |
| Sorbitol | 220 | 334 | > 700 |
| Xylitol | 176 | 256 | 625 |

Or les solubilités élevées du sorbitol ou du xylitol aux températures de montage et de coloration des dragées, qui sont voisines de 40°C, provoquent la redissolution partielle de la couche de sucre inférieure, sur laquelle on apporte le sirop constitutif de la nouvelle couche de montage ou de coloration, puis la recristallisation lors de l'étape de séchage qui suit. Ceci est particulièrement gênant car les colorants migrent dans la partie dissoute induisent des colorations non homogènes à la surface de la dragée. De plus les phénomènes de recristallisation sont difficilement maîtrisables et conduisent à des états de surface non lisses.
Les dragées obtenues ont un aspect marbré, peu esthétique et souvent mat. Il faut alors procéder à des étapes finales longues de polissage et/ou de lustrage au moyen par exemple de cires d'abeille ou de carnuba, pour masquer en partie ces défauts de coloration et de redonner un aspect plus brillant à la dragée.

Contrairement à ce que l'on pouvait attendre, les inventeurs ont trouvé que l'on pouvait obtenir une coloration uniforme et esthétique des dragées, notamment de celles contenant un sucre non cariogène, par un procédé de pelliculage par film, et cela bien que la dispersion aqueuse mise en oeuvre soit bien plus diluée qu'un sirop de sucre puisque sa concentration en matière sèche est inférieure à 25% et souvent inférieure à 20%.

C'est pourquoi l'invention a pour objet un procédé de coloration de dragées, caractérisé en ce qu'il comprend au moins une étape de pulvérisation sur la couche protectrice enveloppant le noyau des dites dragées, d'une dispersion aqueuse colorée comprenant:
- de 40 % à 93 % en poids d'eau,
- de 4 % à 15 % en poids, d'au moins un polymère alimentaire ou pharmaceutique,
- de 3 % à 15 % en poids, d'au moins un plastifiant peu hydrosoluble ayant une chaîne hydrocarbonée comprenant au moins 12 atomes de carbone et
- de 0.1 % à 15 % en poids, de colorants, et dans lequel la couche protectrice est un sucre choisi parmi le sorbitol, le xylitol, le maltitol, le mannitol, le dextrose ou de mélanges de ces sucres.

Par polymère filmogène, on désigne plus particulièrement les polymères choisis parmi les dérivés de cellulose comme les hydroxypropyméthyl celluloses (HPMC), les éthyl cellusoses (EC), les méthyl celluloses (MC), les carboxyméthyl celluloses, les hydroxypropyl celluloses, les carraghénanes, les alginates de sodium, de potassium ou d'ammonium, les gommes guar, adragante, arabique ou xanthane et pour les applications non alimentaires, les polyvinylpyrrolidones, les alcools polyvinyliques, les polymères acryliques ou des mélanges de ces polymères.

Comme plastifiant, on désigne plus particulièrement les plastifiants peu hydrosolubles par exemple, l'acide stéarique, les sels de l'acide stéarique, comme le stéarate de magnésium, le stéarate d'aluminium, l'acide stéarique polyéthoxylé les monoglycérides d'acides gras, les diglycérides d'acides gras et leurs dérivés estérifiés par l'acide acétique, l'acide tartrique ou l'acide lactique, les esters d'acides gras et de propylène glycol, les esters d'acides gras et de sorbitol, les esters d'acides gras et de sorbitanne, les esters d'acides gras et de mannitol, les esters d'acides gras et de mannitanne ou encore certains sucroesters, les sucro glycérides ou les esters de polyglycérol, en particulier ceux caractérisés par un nombre HLB inférieur à 7.

Les colorants utilisés dans l'invention sont ceux cités dans les pharmacopées ou dans les listes d'additifs alimentaires, référencés en Europe sous les numéros E100 à E172, comme, par exemple, les oxydes de fer, les oxydes de titane, de zinc ou de magnésium, les colorants absorbés sur laques d'alumines ou encore certains colorants naturels comme le caramel, les caroténoïdes, la riboflavine ou la chlorophylle. On peut avantageusement aussi utiliser des colorants composites constitués d'un assemblage de silicates de potassium et d'aluminium (mica), de dioxyde de titane et de colorants, tels que ceux commercialisés par la société Merck sous le nom de Candurin^{™}.

Selon un premier mode particulier du procédé tel que défini précédemment, l'opération de pulvérisation est accompagnée d'une opération simultanée de séchage par air chaud à une température inférieure à 40°C.

Selon un deuxième mode particulier du procédé tel que défini précédemment, l'opération de pulvérisation est poursuivie jusqu'à former une pellicule colorée représentant en poids moins de 5 % du poids des dragées.

La dispersion aqueuse mise en oeuvre dans le procédé objet de la présente invention est préparée,
soit en mélangeant à l'eau, successivement, le ou les polymères, le ou les colorants et le ou les plastifiants,
soit en mélangeant à l'eau, successivement, un mélange sec sous forme de poudre, de granulés ou d'extrudâts, constitué d'au moins un polymère et d'au moins un plastifiant, puis un système colorant sous forme solide ou liquide.
Le pelliculage doit être effectué avec un air de séchage ayant une température de préférence inférieure à environ 40°C.

De plus il a été montré que ce procédé permettait d'obtenir des dragées colorées brillantes et rendait inutile les opérations de lustrage final.

La composition mise en oeuvre dans le procédé tel que défini précédemment peut comprendre en outre jusqu'à 15% en poids, de charges, d'additifs, d'édulcorants et / ou d'aromatisants alimentaires ou pharmaceutiques.

Les exemples ci dessous illustrent l'invention et sont donnés à titre non limitatif.

### Exemple 1:

On verse 3 kg de chewing - gum dragéifiés au sorbitol, dans une turbine ventilée Dromatherium^{™} 500 puis on les préchauffe pendant 8 minutes, avec de l'air à 27 °C, circulant avec un débit de 3,3 m³ par seconde.

On prépare une 1 kg d'une dispersion aqueuse par ajout successif sous agitation cisaillante au moyen d'une pale défloculeuse tournant à 700 tours / min, des composants suivants :
850 g d'eau déminéralisée
68 g d'HPMC 6 cps (Pharmacoat® 606)
6 g de monoglycéride acétylé (Cetodan®)
3 g d'aspartam
5,6 g de laque d'érythrosine (E127)
2,5 g de dioxyde de titane (E171)
2,2 g de laque de ponceau 4R (E124)
0,7 g de laque d'indigotine (E132)
12 g de cellulose microcristalline
50 g de Candurin Silver Fine^{™}

Après homogénéisation pendant environ 30 minutes, cette dispersion est pulvérisée sur les chewing - gum au moyen d'un pistolet BINKS^{™}, muni d'une buse de pulvérisation de 0.8 mm.

La pulvérisation en fines gouttelettes est assurée par de l'air comprimé à 2,4 10⁵ Pa. Le débit de pulvérisation est augmenté progressivement en une heure, de 1,2 g à 4 g de dispersion par minute. La température de l'air entrant est maintenue autour de 32 °C. Au bout de 1 heure 40 minutes, 315g de dispersion ont été pulvérisés, ce qui correspond à un dépôt sec de 1,5 % sur les chewing gum. On obtient des chewing gum colorés en rose, brillants, de couleur parfaitement homogène et sans marbrure.

### Exemple 2 :

On prépare une dispersion aqueuse en versant dans 425 g d'eau déminéralisée, un mélange sec constitué de :
58 g d'hydroxypropylméthylcellulose (HPMC),
9,5 g de cellulose microcristalline,
7,5 g de monoglycéride acétylé,
0,45 g de laque de jaune de quinoléine (E104)

On mélange pendant 45 minutes avec une pale défloculeuse tournant à 700 tours / minute, puis la dispersion est broyée dans un broyeur à billes.

On verse 1 kg de bonbons à base de dextrose dans une turbine à dragéifier de laboratoire ERWEKA^{™}. On met en route la turbine à une vitesse de rotation de 11 tours / minute et on souffle de l'air chaud de façon à ce que les bonbons atteignent une température d'équilibre de 30 °C. La dispersion aqueuse est pulvérisée sur les bonbons avec un pistolet BINKS^{™} muni d'une buse de pulvérisation de 0,8 mm.

La pulvérisation en fines gouttelettes est assurée par de l'air comprimé à 2,2 10⁵ Pa. Le débit de pulvérisation est maintenu à 2,2 g / minute et la température des bonbons est maintenue à 30 °C. Après 40 minutes de pulvérisation, 105 g de dispersion ont été pulvérisés, ce qui correspond à un dépôt sec de 1,5 % sur les bonbons.

On obtient des bonbons colorés en jaune clair, de couleur brillante parfaitement homogène, sans marbrure.

### Exemple 3 :

On prépare comme à l'exemple 2, une dispersion aqueuse en versant dans 425 g d'eau déminéralisée, un mélange constitué de :
42 g de HPMC 6 Cps
18 g de HPMC 15 Cps
7.5 g de cellulose microcristalline
7.5 g d'acide stéarique

Puis on ajoute à cette dispersion 6 g de Sepisperse® DRY Orange (préparation colorante sèche à base de dioxyde de titane (E171) et de Jaune orangé (E110) fabriquée par la société Seppic).

L'agitation et le broyage de la dispersion sont réalisés comme à l'exemple 2.

On verse 1 kg de bonbons à mâcher à base de dextrose dans une turbine à dragéifier de laboratoire ERWEKA^{™}. On met en route la turbine à une vitesse de rotation de 11 tours / minute et on souffle de l'air chaud de façon à ce que les bonbons atteignent une température d'équilibre de 28 °C.

La dispersion est pulvérisée sur les bonbons au moyen d'un pistolet BINKS^{™} muni d'une buse de pulvérisation de 0.8 mm. La pulvérisation en fines gouttelettes est assurée par de l'air comprimé à 2,2 10⁵. Le débit de pulvérisation est maintenu à 2,2 g/ minute et la température des bonbons maintenue à 30 °C.

Des prélèvements sont effectués après dépôt de 1 %, 2 %, 3 % et 5 % de matière sèche sur les bonbons. On constate des défauts d'uniformité de couleur et de couvrant jusqu'à un taux de coloration représentant le dépôt de 2 % de dépôt sec. Au-delà les bonbons sont de couleur orangée très uniforme.

## Revendications

1. Procédé de coloration de dragées, **caractérisé en qu'**il comprend au moins une étape de pulvérisation sur la couche protectrice enveloppant le noyau des dites dragées, d'une dispersion aqueuse colorée comprenant:
- de 40 % à 93 % en poids d'eau,
- de 4 % à 15 % en poids, d'au moins un polymère alimentaire ou pharmaceutique,
- de 3 % à 15 % en poids, d'au moins un plastifiant peu hydrosoluble ayant une chaîne hydrocarbonée comprenant au moins 12 atomes de carbone et
- de 0.1 % à 15 % en poids, de colorant, et dans lequel la couche protectrice est un sucre choisi parmi le sorbitol, le xylitol, le maltitol, le mannitol, le dextrose ou de mélanges de ces sucres.

2. Procédé tel que défini à la revendication 1, dans lequel le polymère filmogène est choisi parmi les dérivés de cellulose comme les hydroxypropyméthyl celluloses (HPMC), les éthyl cellusoses (EC), les méthyl celluloses (MC), les carboxyméthyl celluloses, les hydroxypropyl celluloses, les carraghénanes, les alginates de sodium, de potassium ou d'ammonium, les gommes guar, adragante, arabique ou xanthane, les polyvinylpyrrolidones, les alcools polyvinyliques, les polymères acryliques ou des mélanges de ces polymères.

3. Procédé tel que défini à la revendication 1, dans lequel le plastifiant est choisi parmi l'acide stéarique, les sels de l'acide stéarique, comme le stéarate de magnésium, le stéarate d'aluminium, l'acide stéarique polyéthoxylé, les monoglycérides d'acides gras, les diglycérides d'acides gras et leurs dérivés estérifiés par l'acide acétique, l'acide tartrique ou l'acide lactique, les esters d'acides gras et de propylène glycol, les esters d'acides gras et de sorbitol, les esters d'acides gras et de sorbitanne, les esters d'acides gras et de mannitol, les esters d'acides gras et de mannitanne ou encore certains sucroesters, les sucro glycérides ou les esters de polyglycérol.

4. Procédé tel que défini à la revendication 3, dans lequel le plastifiant est choisi parmi ceux **caractérisés par** un nombre HLB inférieur à 7.

5. Procédé tel que défini à l'une des revendications 1 à 4, dans lequel l'opération de pulvérisation est accompagnée d'une opération simultanée de séchage par air chaud à une température inférieure à 40°C.

6. Procédé tel que défini à l'une des revendications 1 à 5, dans lequel l'opération de pulvérisation est poursuivie jusqu'à former une pellicule colorée représentant en poids moins de 5 % du poids des dragées.

7. Procédé tel que défini à l'une des revendications 1 à 6, dans lequel la dispersion aqueuse mise en oeuvre est préparée en mélangeant à l'eau, successivement, le ou les polymères, le ou les colorants et le ou les plastifiants.

8. Procédé tel que défini à l'une des revendications 1 à 7, dans lequel la dispersion aqueuse mise en oeuvre est préparée mélangeant à l'eau, successivement, un mélange sec sous forme de poudre, de granulés ou d'extrudâts, constitué d'au moins un polymère et d'au moins un plastifiant, puis un système colorant sous forme solide ou liquide.

9. Procédé tel que défini à l'une des revendications 1 à 8, dans lequel le pelliculage est effectué avec un air de séchage ayant une température inférieure à 40°C.

## Claims

1. Method of colouring dragées, **characterized in that** it comprises at least one step of spraying, onto the protective layer enveloping the core of said dragées, a coloured aqueous dispersion comprising:
- from 40% to 93% by weight of water;
- from 4% to 15% by weight of at least one food or pharmaceutical polymer;
- from 3% to 15% by weight of at least one plasticizer that is not very water soluble having a hydrocarbon-based chain comprising at least 12 carbon atoms; and
- from 0.1% to 15% by weight of dyes,
and in which the protective layer is a sugar chosen from sorbitol, xylitol, maltitol, mannitol, dextrose or mixtures of these sugars.

2. Method as defined in Claim 1, in which the film-forming polymer is chosen from cellulose derivatives such as hydroxypropylmethyl celluloses (HPMCs), ethyl celluloses (ECs), methyl celluloses (MCs), carboxymethyl celluloses, hydroxypropyl celluloses, carrageenans, sodium, potassium or ammonium alginates, guar gum, gum tragacanth, gum arabic or xanthan gum, polyvinylpyrrolidones, polyvinyl alcohols, acrylic polymers or blends of these polymers.

3. Method as defined in Claim 1, in which the plasticizer is chosen from stearic acid, stearic acid salts, such as magnesium stearate, aluminium stearate, polyethoxylated stearic acid, fatty acid monoglycerides, fatty acid diglycerides and their derivatives esterified by acetic acid, tartaric acid or lactic acid, esters of fatty acids and propylene glycol, esters of fatty acids and sorbitol, esters of fatty acids and sorbitan, esters of fatty acids and mannitol, esters of fatty acids and mannitan or else certain sucroesters, sucroglycerides or polyglycerol esters.

4. Method as defined in Claim 3, in which the plasticizer is chosen from those **characterized by** an HLB number below 7.

5. Method as defined in one of Claims 1 to 4, in which the spraying operation is accompanied by a simultaneous operation of hot-air drying at a temperature below 40°C.

6. Method as defined in one of Claims 1 to 5, in which the spraying operation is continued until a coloured film representing less than 5% by weight of the weight of the dragées is formed.

7. Method as defined in one of Claims 1 to 6, in which the aqueous dispersion used is prepared by mixing successively with the water, the polymer or polymers, the dye or dyes and the plasticizer or plasticizers.

8. Method as defined in one of Claims 1 to 7, in which the aqueous dispersion used is prepared by mixing successively with water, a dry mix in powder, granule or extrudate form, composed of at least one polymer and at least one plasticizer, then a dye system in solid or liquid form.

9. Method as defined in one of Claims 1 to 8, in which the film formation is carried out with drying air having a temperature below 40°C.

## Patentansprüche

1. Verfahren zum Färben von Dragees, **dadurch gekennzeichnet, dass** es mindestens einen Schritt umfasst, bei dem man auf der Schutzschicht, die den Kern der Dragees einhüllt, eine gefärbte wässrige Dispersion zerstäubt, die Folgendes umfasst:
- 40 bis 93 Gew.-% Wasser,
- 4 bis 15 Gew.-% mindestens eines nahrungsmittelverträglichen oder pharmazeutischen Polymers,
- 3 bis 15 Gew.-% mindestens eines wenig wasserlöslichen Weichmachers mit einer Kohlenwasserstoffkette, die mindestens 12 Kohlenstoffatome umfasst, und
- 0,1 bis 15 Gew.-% Farbstoffe, wobei die Schutzschicht ein Zucker ist, der aus Sorbit, Xylit, Maltit, Mannit, Dextrose oder Gemischen dieser Zucker ausgewählt ist.

2. Verfahren nach Anspruch 1, wobei das filmbildende Polymer aus Cellulosederivaten wie Hydroxypropylmethylcellulosen (HPMC), Ethylcellulosen (EC), Methylcellulosen (MC), Carboxymethylcellulosen, Hydroxypropylcellulosen, Carraghenanen, Natrium-, Kalium- oder Ammoniumalginaten, Guargummi, Tragant, Gummiarabicum oder Xanthangummi, Polyvinylpyrrolidonen, Polyvinylalkoholen, Acrylpolymeren oder Gemischen dieser Polymere ausgewählt ist.

3. Verfahren nach Anspruch 1, wobei der Weichmacher aus Stearinsäure, Salzen der Stearinsäure wie Magnesiumstearat, Aluminiumstearat, polyethoxylierter Stearinsäure, Fettsäuremonoglyceriden, Fettsäurediglyceriden und ihren mit Essigsäure, Weinsäure oder Milchsäure veresterten Derivaten, den Estern von Fettsäuren und Propylenglycol, den Estern von Fettsäuren und Sorbit, den Estern von Fettsäuren und Sorbitan, den Estern von Fettsäuren und Mannit, den Estern von Fettsäuren und Mannitan oder auch bestimmten Zuckerestern, zuckerglyceriden oder den Estern von Polyglycerin ausgewählt ist.

4. Verfahren nach Anspruch 3, wobei der Weichmacher aus denjenigen ausgewählt ist, die durch eine HLB-Zahl unter 7 **gekennzeichnet** sind.

5. Verfahren nach einem der Ansprüche 1 bis 4, wobei der Zerstäubungsschritt von einem gleichzeitigen Schritt des Heißlufttrocknens bei einer Temperatur unter 40°C begleitet wird.

6. Verfahren nach einem der Ansprüche 1 bis 5, wobei der Zerstäubungsschritt bis zur Bildung eines gefärbten Überzugs fortgeführt wird, der, bezogen auf das Gewicht, weniger als 5 Gew.-% der Dragees darstellt.

7. Verfahren nach einem der Ansprüche 1 bis 6, wobei die verwendete wässrige Dispersion hergestellt wird, indem man nacheinander das oder die Polymer(e), den oder die Farbstoff(e) und den oder die Weichmacher in Wasser mischt.

8. Verfahren nach einem der Ansprüche 1 bis 7, wobei die verwendete wässrige Dispersion hergestellt wird, indem man nacheinander ein trockenes Gemisch in Form von Pulver, Granulaten oder Extrudaten, das aus mindestens einem Polymer und mindestens einem Weichmacher besteht, und dann ein Farbstoffsystem in fester oder flüssiger Form in Wasser mischt.

9. Verfahren nach einem der Ansprüche 1 bis 8, wobei der Überzug mit Trocknungsluft durchgeführt wird, die eine Temperatur unter 40°C hat.
